# EUROPEAN PATENT SPECIFICATION

(11) **EP 3 681 057 B1**
(45) Date of publication and mention of the grant of the patent: **04.05.2022**
(21) Application number: 19151625.1
(22) Date of filing: 14.01.2019
(51) Int. Cl.: H04B 10/079

(54) **MONITORING SIGNALS IN A PASSIVE OPTICAL NETWORK**
ÜBERWACHUNG VON SIGNALEN IN EINEM PASSIVEN OPTISCHEN NETZWERK
SURVEILLANCE DE SIGNAUX DANS UN RÉSEAU OPTIQUE PASSIF

(43) Date of publication of application: 15.07.2020
(73) Proprietor: Nokia Solutions and Networks Oy, 02610 Espoo (FI)
(72) Inventor: DELABY, Olivier, 5101 Loyers (BE); BARRAGE, Marwan, 1880 Kapelle-op-den-Bos (BE); DUPUIS, Nicolas, 4051 Chaudfontaine (BE)
(74) Representative: IP HILLS NV

(56) References cited:
- WO-A1-2008/128462
- CN-A- 107 294 596
- US-B2- 8 724 102

## Description

### Technical Field

Various example embodiments relate to monitoring transmitted signals in a passive optical network.

### Background

A passive optical network, PON, is a telecommunications technology for providing fiber to end consumers. A PON comprises a point-to-multipoint set-up whereby unpowered fiber optic splitters are used to provide a single optical fiber to serve multiple end-points.

A PON comprises an optical line terminal, OLT, which serves as the service provider endpoint, and a number of optical network terminals, ONTs, near end users.

WO 2008/128462 A1 describes a fault detection method, system and apparatus for optical distributed network based on detecting faults by comparing the loss of the downlink signal with the loss of the upstream signal.

US 8724102 B2 describes a client unit and a method for fault analysis in passive optical network, PON, by means of an optical time domain reflectometry, OTDR, wherein faults are detected by comparing a new OTDR measurement with a previous reference OTDR measurement indicating the original state of the PON.

### Summary

A PON is sensitive to disturbances or degradations caused by impairments.

Amongst others, it is an object of embodiments of the present disclosure to provide a solution that improves the detection of impairments affecting a PON to let an operator intervene in an efficient and accurate way.

This object is achieved, according to a first example aspect of the present disclosure, by an apparatus as defined by claim 1.

In the PON signals are transmitted between the OLT and one or more ONTs. In case of PON degradations, such as for example fiber bends, a pressured fiber, or any other impairments affecting the PON, the impairments are detected by monitoring a power level of signals exchanged between the OLT and the ONTs. Typically, such identification of physical impairments is made by collecting measurements of the optical power received at the ONTs. In particular, by monitoring the evolution of such received power levels over time, a fault is identified in case of a large decrease of the power level compared to the evolution of the power level observed in the past.

Each of these impairments demand a different approach to efficiently solve them depending on the type and/or location. In other words, for operators it is critical to know how to conduct and react on the identified impairment. Differently formulated, since different impairments require different types of interventions, an operator needs to prioritize the impairments and related interventions.

Depending on the magnitude of the drop and the direction wherein it is observed, the impairment may, for example, be identified as the presence of a bend in the fiber, like a loop or a tiny crush, a bad connector, a damaged fiber, a contact misalignment between fibers, a dirty contact between fibers, or any other degradation. In other words, it should be further understood that an impairment is identified based on the drop in the power level.

Thus, next, when an impairment is identified, a severity score is assigned thereto. This severity score expresses the severity of the identified impairment. This severity score indicates how an operator needs to conduct and how critical the impairment may be to the operator. For example, it may express that the impairment is impacting a subscriber's service and that it is a cause of the subscriber's complain.

The assigning of the severity score is based on the power level drop itself to identify the impairment combined with the operating range of the PON. The operating range of the PON is regarded as the range of power levels wherein the PON optimally operates. Thus, by relating the power drop to the operating range, a severity score may be determined and assigned to the identified impairment. Further, the operating range of the PON comprises a sensitivity level of the PON. The sensitivity level of the PON is the level above which a power level of a signal exchanged through the PON is preferably situated. Differently formulated, the PON is designed to exchange signals comprising a power level above the sensitivity level.

By assigning a severity score to the impairment, the operator gets an overview of the impairments affecting the PON and therefore also impacting subscribers, whereby it is indicated which impairments need to be prioritized and require a prompt need for repair.

Further, based on the assigning of severity scores to impairments, the operator may plan field interventions, and even may delay some other interventions. This way, the amount of unnecessary field interventions may be reduced, and the number of satisfied subscribers may be increased by giving priority to impairments that are severely affecting services.

The respective assigned severity scores to the identified impairments may further be classified. This enables the operator of the PON to prioritize the interventions based on this classification. Furthermore, this allows the operator to better plan the interventions in the field and to avoid sending too fast or wrongly classified technicians for less severe faults. This leads to less maintenance costs, more optimal planification, and thus a higher satisfaction of the subscribers.

According to example embodiments, the means are further configured to perform the monitoring upstream and/or downstream in the PON.

The monitoring and observation of the power levels may be performed from the ONTs to the OLT, and/or from the OLT to the ONTs. In other words, the monitoring is performed in a downstream direction as well as in an upstream direction.

According to example embodiments, the signal is received at an optical line terminal, OLT, and/or an optical network terminal, ONT, of the PON.

Depending on the presence of a drop in power levels in the different upstream and/or downstream directions, thus from the OLT to the ONTs and/or from the ONTs to the OLT, the cause of the impairment can be derived by receiving the signal at the OLT and/or the ONTS.

The apparatus is configured to obtain the sensitivity level of the PON that it is monitoring. Alternatively, the sensitivity level is provided to the apparatus, for example directly as a variable, or indirectly by providing the type of the PON, such that the sensitivity level can be derived therefrom. Otherwise, the apparatus may also identify the sensitivity level of the PON. It should thus be understood that the apparatus is or becomes aware of the sensitivity level of the PON that it is monitoring.

Next, the sensitivity level is taken into account to assign a severity score to the impairment. In other words, the operating range also comprises, according to the embodiments of the invention, the sensitivity level.

The height of the power level drop, this is the difference between the power level before the drop and the power level after the drop, and when it relates to an impairment, may indicate a severity of the impairment. On the other hand, a deep drop thus not necessarily indicates a severe drop.

Thus, it is an advantage that by assigning a severity score to the impairment, the type of the PON is taken into account by considering the sensitivity level.

According to example embodiments, the operating range further comprises a margin level with respect to the sensitivity level.

When considering the sensitivity level of the PON, a margin level may further be taken into account. This margin level can be used as a safety margin with regard to the sensitivity level wherein signals are still efficiently exchanged. In other words, an operator can avoid operating at the limit of the sensitivity level by taking into account a margin level on top of the sensitivity level.

When a power level drop, for example, crosses the margin level, this is the power level before the drop was above the margin level, and after the drop under the margin level, the fiber is still operable, but an intervention may shortly be needed. Thus, by assigning the severity score by taking into account the margin level, the operator gets an indication on the urgency when an intervention will be needed.

According to example embodiments, the operating range further comprises a predefined threshold with respect to the margin level.

The sensitivity and margin levels may be defined by the fabricant of the fibers used in the PON. These margins may thus be defined at a factory where the fibers are produced and used as defined parameters by the apparatus. Additionally, the apparatus may likewise take a predefined threshold with respect to the margin level into account. This way, the operator may consider proper particularities of the PON based on, for example, knowledge and experiences during operations and maintenances in the past. It is thus an advantage that the apparatus that monitors the PON may be adapted to the needs of an individual operator.

According to the embodiments of the invention, the assigning of the severity score is further based on a difference between the drop and the sensitivity level.

In other words, when assigning the severity score, the height of the drop is taken into account by considering a margin that is left to the sensitivity level. This way, the importance of the drop in upstream and/or downstream directions, the remaining margin to the sensitivity level, the margin level, and the threshold may all be combined to assign the severity score.

As a result, the assigning of the severity score is adjusted to the type of PON, to the needs and preferences of the operator, and to the margin left to the sensitivity level whether or not taking into account a margin and/or threshold. Because of this, the severity score not only indicates a severity of the identified impairments, but also takes into account the particularities of the monitored PON.

According to example embodiments, the means are further configured to classifying the impairment as a severe impairment or a non-severe impairment based on the severity score.

Advantageously, based on the assigned severity scores to identified impairments, the apparatus may further classify an impairment as either severe or nonsever. This way, the operator immediately obtains an overview of impairments which requires promptly his attention, and other impairments which needs to be solved, but for which an intervention can be delayed. The severe impairments, for example, have a direct impact on user's services, while the non-severe impairments have not. The division or partition between the severe and non-severe impairments may be based on a predefined limit above which severity scores are considered severe, and under which that are not considered severe. This limit may further be based on knowledge and experiences of the operator or be determined by tests performed in a test environment.

According to example embodiments, the impairment is identified as a bend, the bend comprising a microbend or a macrobend.

Preferably, the assignment of severity scores is limited to bends. In other words, when monitoring the power levels, and identifying therefrom impairments, the assigning of a severity score in the next step is only performed when a bend is identified. This bend may either be a macrobend or a microbend, which is derivable by the drop of the power level.

Since bends affect each type of PON, independently of which technology and/or type of connectors that are used, the apparatus becomes therefore immediately applicable and implementable for monitoring any type of PON.

According to example embodiments, the PON is one of the group of a Gigabit PON, an XGS-PON, a NGPON2, or a P2P-PON.

In other words, a plurality of technologies may be in existence in the PON.

According to a second aspect, a method is disclosed comprising the steps of claim 10.

According to example embodiments, the method further comprises the step of:
- classifying the impairment as a severe impairment or a non-severe impairment based on the severity score.

According to a third aspect, a computer program product is disclosed comprising computer-executable instructions for performing the steps of claim 12 when the program is run on a computer.

According to a fourth aspect, a computer readable storage medium is disclosed comprising computer-executable instructions for performing the steps of claim 13 when the program is run on a computer.

### Brief Description of the Drawings

Some example embodiments will now be described with reference to the accompanying drawings.
Fig. 1 shows an example embodiment of a passive optical network;
Fig. 2 shows another example embodiment of identifying an impairment as a connector issue or a bend based on a drop in a power level;
Fig. 3 shows a first example embodiment of a drop in a power level;
Fig. 4 shows a second example embodiment of a drop in a power level; and
Fig. 5 shows an example embodiment of steps performed to identify a drop of a power level as an impairment;
Fig. 6 shows an example embodiment of steps performed to identify a bend as severe or non-severe;
Fig. 7 shows an example embodiment of a suitable computing system for performing one or several steps in embodiments of the invention.

### Detailed Description of Embodiment(s)

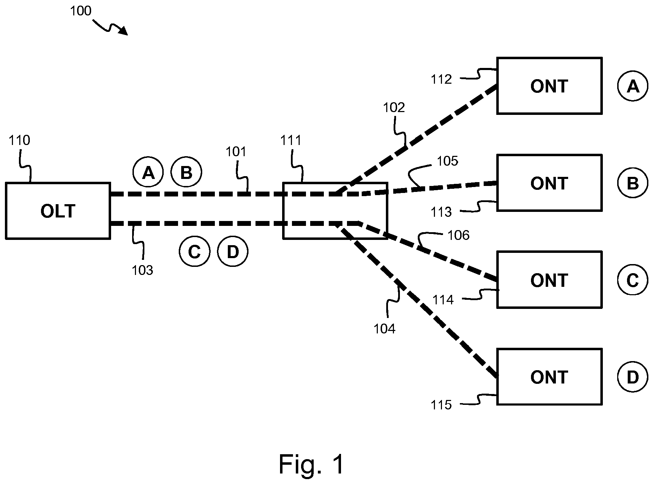

In Fig. 1 a passive optical network, PON, is illustrated. The PON 100 comprises an optical line terminal 110, OLT, and a plurality of optical network terminals 112-115, ONTs. The illustrated PON 100 further comprises an unpowered fiber optic splitter 111. The PON 100 is configured such that the OLT 110 and the ONTs 112-115 can exchange signals comprising data. For example, through the optical fiber 101 and via the splitter 111 splitting the fiber 101 into fibers 102 and 105 which are respectively connected to ONT 112 and 113, data packets A and B can be exchanged with respectively OLT 112 and OLT 113. Likewise, for the optical fiber 103 and through the splitter 111, the fiber 103 is split into fiber 106 respectively 104, such that data packets C and D can be exchanged with ONT 114 respectively ONT 115.

The PON 100 can support a plurality of different PON technologies, like Gigabit PON, XGS-PON, NGPON2, and/or P2P-PON. Furthermore, the OLT and ONT settings may be adapted to one or more of these technologies. It should thus be understood that the illustrated PON 100 is a PON known in the art and able to support a multitude of existing PON technologies.

Within the PON 100 an impairment may occur. To identify such an impairment, the PON 100 is monitored, and more in particular the received power levels at the OLT 110 and/or the ONTs 112-115. In other words, the monitoring is performed upstream and/or downstream.

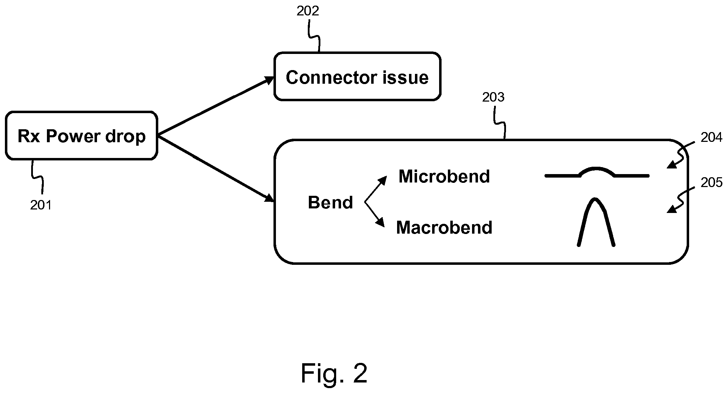

Based on the monitoring of the power levels, an impairment may thus be identified. This is illustrated in Fig. 2, wherein based on a drop in the power level 201, an impairment may be identified as a connector issue 202 or a bend 203. Furthermore, when a bend 203 is identified, it may be further be identified as a loop or a macrobend 205, or a crush or microbend 204. The bend, either a microbend 204 or a macrobend 205, may occur in a fiber 101-106 and is identified through a power drop 201 in received power at both the ONT and OLTs, i.e. on both upstream and downstream wavelengths.

Since different fiber 101-106 impairments, like crushes or microbends, cable loops or macrobends, and/or connector issues, different drops 201 of the received power may occur. Further, they may occur on upstream and downstream wavelengths at the same time. Next, the type of impairment can be identified based on the power drop 201.

Further, beyond the classification or identification of the type of impairment in categories like a microbend 204 or a macrobend 205, a severity score can be assigned to the impairments as well.

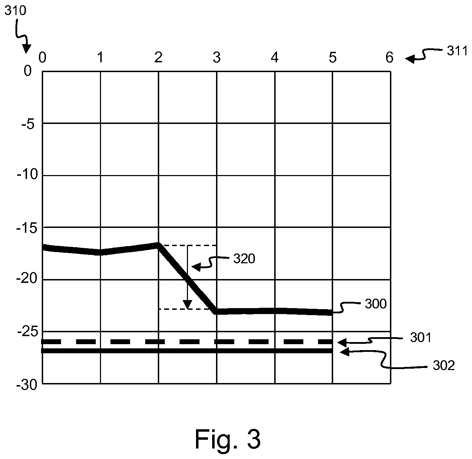

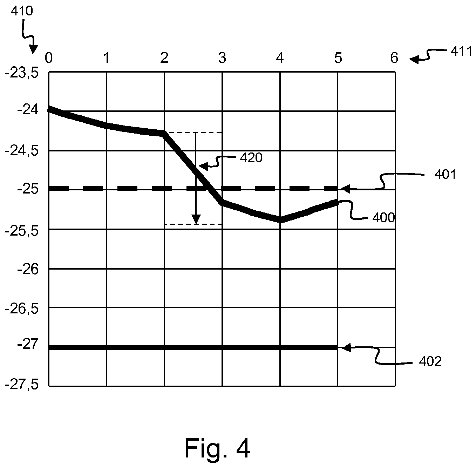

The assignment of the severity score can, according to example embodiments, based on different criteria. For example, the more important the drops of power upstream and downstream, i.e. the deeper are these drops, the more severe the impairment will be. This is further illustrated in Fig. 3 which illustrates a first example embodiment of a drop in a power level. In the graph illustrated in Fig. 3 the abscissa 311 represents a time period, while the ordinate represents a power level 310 expressed in dB. In other words, the curve 300 represents a power level 310 of a monitored signal in the PON 100 during a time period 311. In Fig. 4 a second example embodiment of a curve 400 of a power level 410 during a time period 411 is illustrated.

In Fig. 3 the power drop by which an impairment is identified corresponds to drop 320. In Fig. 4 the power drop by which an impairment is identified corresponds to drop 420.

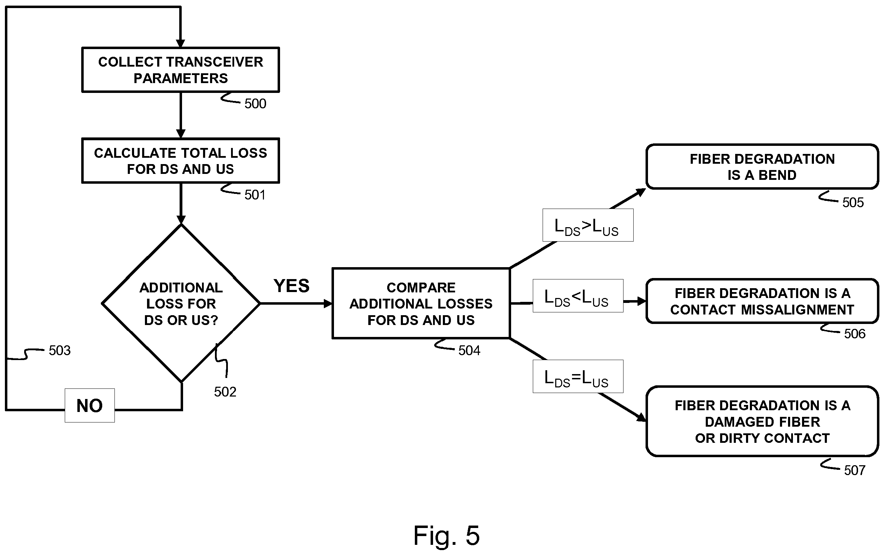

The steps performed to identify a drop as an impairment in the PON 100 are further illustrated in Fig. 5. In a first step transceiver parameters are collected 500. Next, from the collected 500 parameters, a total loss for upstream and downstream is calculated 501. Next, it is verified if there is an additional loss for downstream or upstream. If there is no additional loss, the algorithm returns 503 to the collecting 500 step. If there is an additional loss, the algorithm continues to a comparison 504 step.

In the comparison 504 step, the additional losses for the downstream and upstream are compared. When the additional downstream losses are greater than the additional upstream losses, the impairment is identified as a bend 505. When the additional downstream losses are smaller than the additional upstream losses, the impairment is identified as a fiber degradation, and in particular to a contact misalignment 506. In the case that the additional downstream losses equal the additional upstream losses, the impairment is identified as a damaged fiber or a dirty contact 507.

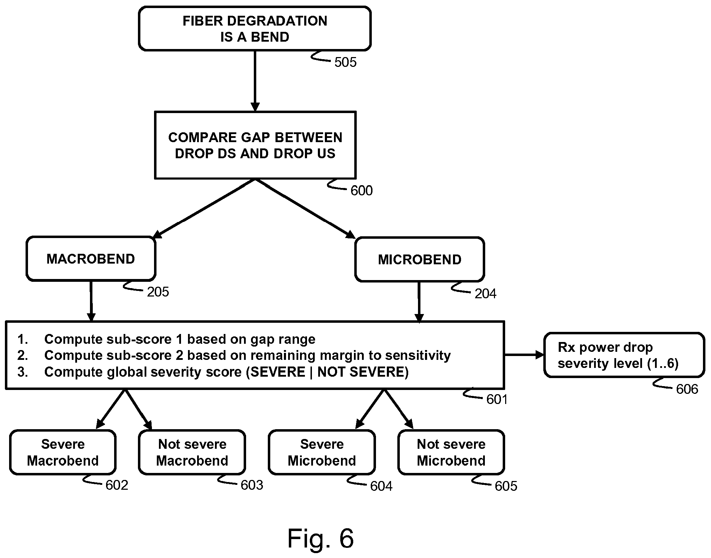

Preferably, a severity score to an impairment will be assigned if the impairment is identified as a bend 505, 203, since severe bends need to be removed, regardless of the physical layout of it, this is macrobend or microbend. Further, based on the assigned severity score, it is determined that a bend is severe or non-severe. In Fig. 6 the steps performed to identify a bend as severe or non-severe are illustrated. Further, Fig. 6 may be regarded as a continuation of the steps illustrated in Fig. 5, which both comprise step 505.

In Fig. 3 and Fig. 4 the respective drops 320 and 420 are identified as related to a bend 505. In these graphs, a sensitivity level of the PON 100 is further illustrated. For Fig. 3 this corresponds to sensitivity level 302, while in Fig. 4 this corresponds to sensitivity level 402. In both cases, the sensitivity level corresponds to -27dB. In Fig. 3 the power level after the drop 320 is closer to the sensitivity level 302, which means that there is less remaining margin to the sensitivity level compared to the situation in Fig. 4. This implies that the related impairment to drop 320 may be more severe than the impairment related to drop 420.

The severity of the impairment, and in this case a bend 505, can be derived from the amplitude of the drop 320 or 420 at both the ONT and OLT, combined with a remaining margin to the sensitivity level of the impacted ONT, since the sensitivity level is the level below which a signal is too weak to be successfully decoded. Thus, the smaller the remaining margin to the sensitivity level 302, 402 the more severe is the impairment.

Further, since it may be avoided operating too close to the sensitivity level 302, 402 of the PON 100, a margin level may be taken into account as well. This is further illustrated by margin level 301 for the graph 300 illustrated in Fig. 3, and by margin level 401 for the graph 400 illustrated in Fig. 4. Since the drop 420 in Fig. 4 crosses the margin level 401, this may also further indicate that the impairment related to the drop 420 is severe.

To efficiently assign a severity score, firstly the drops both upstream and downstream are monitored and compared together to ranges determined empirically to determine the severity of the drops 320, 420. Next, the power level after the drop is compared to the sensitivity level 302, 402 of the optics of the PON 100. The sensitivity level may, for example, be known by definition out of the factory where the optics are produced. As a result of the comparison, a remaining margin to the sensitivity level 302, 402 is obtained. This margin is then on its turn compared to a threshold and if it is below that threshold, the bend is regarded as severe. The threshold may, for example, be set to 1dB in order to keep some margin and declare a drop severe before a complete disruption of the signal.

The classification of a bend as severe or non-severe based on the assigned severity score will further be explained by the steps illustrated in Fig. 6.

As already highlighted, the step 505 corresponds to the same step illustrated in Fig. 5, in other words, when a drop is identified as a bend 505. Next, when a fiber degradation is identified as a bend 505, based on a comparison 600 of a gap between the drop upstream and the drop downstream, the bend may be either identified as macrobend 205, or a microbend 204, as already illustrated in Fig. 2.

In the next step 601, three substeps are performed. Firstly, a first sub-score based on a gap range is computed. In the case of an identical remaining margin after the drops 320, 420 to the sensitivity level 302, 402, a bigger drop has to be considered as more severe than a smaller one. In other words, when a power level is initially satisfactory the occurring of a larger drop will impact the quality of the data transmission more compared to a smaller drop, and thus critical from a received power level perspective.

Secondly, a second sub-score is computed based on a remaining margin to the sensitivity level 302, 402. When an identical drop occurs, even a small one, a small remaining margin to the sensitivity level 302, 402 has to be considered as severe. This especially applies when the received power level is already low before the drop, this is close to the sensitivity level 302, 402. In this latter case, even a small drop is critical since errors could appear and an ONT 112-115 could be close to disruption.

Finally, a global severity score is computed, from which it can be derived if the bend is regarded as severe or non-severe. This may, for example, be achieved by defining six levels of severity levels 606. Based on these severity levels 606, a microbend 204 may be regarded as severe 604 or non-severe 605, and likewise a macrobend 205 may be regarded as severe 602 or non-severe 603.

The six severity levels 606 may be adapted to the type of technologies employed in the PON 100. For example, a GPON will have different rules than a XGS PON. Considering the drop of received power in both upstream, dropUS, and downstream, dropDS, directions, rules for a bend severity classification can be made for each bend type, and respective ranges thereof can be combined together to come with global and generic ranges.

For an XGS PON technology the rules can be as follows:
Rules for Macrobends:
   If dropDS in range [0,0-4,0], Severity level 1; and
   If dropDS in range [4,0-7,0], Severity level 2; and
   If dropDS in range [7,0-12,0], Severity level 3; and
   If dropDS > 12,0 OR dropUS > 1,0, Severity level 4; and
Rules for Microbends:
   If dropDS in range [0,0-4,0], Severity level 1; and
   If dropDS in range [4,0-6,0] AND dropUS in range [0,5-1,0], Severity level 2; and
   If dropDS in range [4,0-6,0] AND dropUS in range [1,0-3,0], Severity level 3; and
   If dropDS > 6,0 OR dropUS > 3,0, Severity level 4;
which results in a classification of six severity levels in a XGS as follows:
   If dropDS in range [0,0-4,0], Severity level 1; and
   If dropDS in range [4,0-6,0] AND dropUS in range [0,0-1,0], Severity level 2; and
   If dropDS in range [4,0-6,0] AND dropUS in range [1,0-3,0], Severity level 3; and
   If dropDS in range [7,0-12,0] AND dropUS in range [0,0-1,0], Severity level 4; and
   If dropDS in range [7,0-12,0] AND dropUS in range [1,0-3,0], Severity level 5; and
   If dropDS > 12,0 OR dropUS > 3,0, Severity level 6.

For a GPON technology the rules for a classification become:
If dropDS in range [0,0-4,0], Severity level 1; and
If dropDS in range [4,0-10,0], Severity level 2; and
If dropDS > 10,0 OR dropUS > 3,5, Severity level 3; and
Rules for Microbends:
   If dropDS in range [0,0-8,0], Severity level 1; and
   If dropDS in range [8,0-11,0], Severity level 2; and
   If dropDS > 11,0 OR dropUS > 6,0, Severity level 3;
which results in a classification of six severity levels in a GPON as follows:
   If dropDS in range [0,0-4,0], Severity level 1; and
   If dropDS in range [4,0-8,0] AND dropUS in range [0,0-1,0], Severity level 2; and
   If dropDS in range [4,0-8,0] AND dropUS in range [1,0-3,5], Severity level 3; and
   If dropDS in range [8,0-10,0] AND dropUS in range [0,0-1,0], Severity level 4; and
   If dropDS in range [8,0-10,0] AND dropUS in range [1,0-3,5], Severity level 5; and
   If dropDS > 10,0 OR dropUS > 3,5, Severity level 6.

For both technologies, XGS and GPON, six levels of severity are thus considered. These levels are further classified into two predefined categories, namely severe versus non-severe, whereby the operator of the PON 100 can define the limit. For example, the severity levels 1, 2 and 3 may be considered as non-severe, while the severity levels 4, 5 and 6 may be considered as severe.

A global rule for considering a drop as severe or non-severe may be thus as follows. If a drop related severity level is considered as severe OR if the remaining margin to the sensitivity level is severe, the impairment is considered as severe otherwise the impairment is not considered as severe. Finally, the determined severity can be displayed on a graphical user interface, such that the operator has a listing page of the impairments with the indication that the impairment is severe or non-severe.

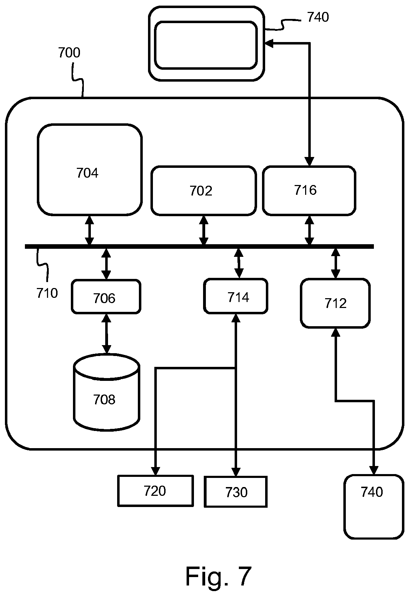

Fig. 7 shows a suitable computing system 700 enabling to implement embodiments of the method for monitoring a PON according to the invention. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems, for example with other computing devices 740. The communication interface 712 of computing system 700 may be connected to such another computing system by means of a local area network (LAN) or a wide area network (WAN) such as for example the internet. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An apparatus (740) comprising means for performing:
- monitoring (500) a power level (310, 410) of a signal (300, 400) in a passive optical network, PON (100); and
- identifying (504) an impairment (202, 203) of the PON (100) based on a drop (320, 420) in the power level (310, 410); and
**characterized in that** the means are further configured to:
a ssign (606) a severity score to the impairment (202, 203) based on the drop (320, 420) in the power level and on an operating range of the PON (100), wherein the operating range of the PON comprises a sensitivity level (302, 402) of the PON (100); and wherein the assigning (606) of the severity score is further based on a difference between the drop (320, 420) and the sensitivity level (302, 402).

2. The apparatus (740) according claim 1, wherein means are further configured to perform the monitoring upstream and/or downstream in the PON.

3. The apparatus (740) according to one of the preceding claims, wherein the signal is received at an optical line terminal (110), OLT, and/or an optical network terminal, ONT (112,115), of the PON (100).

4. The apparatus (740) according to one of the preceding claims, wherein the operating range further comprises a margin level (301, 401) with respect to the sensitivity level (302, 402).

5. The apparatus (740) according to claim 4, wherein the operating range further comprises a predefined threshold with respect to the margin level (301, 401).

6. The apparatus (740) according to one of the preceding claims, wherein the means are further configured to:
- classifying (601) the impairment as a severe impairment (602, 604) or a non-severe impairment (603, 605) based on the severity score.

7. The apparatus (740) according to one of the preceding claims, wherein the impairment is identified as a bend (203), the bend comprising a microbend (204) or a macrobend (205).

8. The apparatus (740) according to one of the preceding claims, wherein the PON (100) is one of the group of a Gigabit PON, an XGS-PON, a NGPON2, or a P2P-PON.

9. A method comprising the steps of:
- monitoring (500) a power level (310, 410) of a signal (300, 400) in a passive optical network, PON (100); and
- identifying (504) an impairment (202, 203) of the PON (100) based on a drop (320, 420) in the power level (310, 410); and
**characterized in that** the method further comprising:
- assigning (606) a severity score to the impairment (202, 203) based on the drop in the power level (320, 420) and on an operating range of the PON (100), wherein the operating range of the PON comprises a sensitivity level (302, 402) of the PON (100); and wherein the assigning (606) of the severity score is further based on a difference between the drop (320, 420) and the sensitivity level (302, 402).

10. The method according to claim 9, further comprising the step of:
- classifying (601) the impairment as a severe impairment (602, 604) or a non-severe impairment (603, 605) based on the severity score.

11. A computer program product comprising computer-executable instructions for performing the following steps when the program is run on a computer:
- monitoring (500) a power level (310, 410) of a signal (300, 400) in a passive optical network, PON (100); and
- identifying (504) an impairment (202, 203) of the PON (100) based on a drop (320, 420) in the power level (310, 410); and
- **characterized in that** the computer program product further comprises computer-executable instructions for performing: assigning (606) a severity score to the impairment (202, 203) based on the drop (320, 420) in the power level and on an operating range of the PON (100), wherein the operating range of the PON comprises a sensitivity level (302, 402) of the PON (100); and wherein the assigning (606) of the severity score is further based on a difference between the drop (320, 420) and the sensitivity level (302, 402).

12. A computer readable storage medium comprising computer-executable instructions for performing the following steps when the program is run on a computer:
- monitoring (500) a power level (310, 410) of a signal (300, 400) in a passive optical network, PON (100); and
- identifying (504) an impairment (202, 203) of the PON (100) based on a drop (320, 420) in the power level (310, 410); and
**characterized in that** the computer readable storage medium further comprises computer-executable instructions for performing:
- assigning (606) a severity score to the impairment (202, 203) based on the drop (320, 420) in the power level and on an operating range of the PON (100), wherein the operating range of the PON comprises a sensitivity level (302, 402) of the PON (100); and wherein the assigning (606) of the severity score is further based on a difference between the drop (320, 420) and the sensitivity level (302, 402).

## Patentansprüche

1. Vorrichtung (740), die Mittel zum Durchführen von Folgendem umfasst:
- Überwachen (500) eines Leistungsniveaus (310, 410) eines Signals (300, 400) in einem passiven optischen Netzwerk, PON (100); und
- Identifizieren (504) einer Beeinträchtigung (202, 203) des PON (100) auf Basis eines Abfalls (320, 420) des Leistungsniveaus (310, 410) und
**dadurch gekennzeichnet, dass** die Mittel ferner zu Folgendem ausgelegt sind:
- Zuweisen (606) eines Schweregrads zur Beeinträchtigung (202, 203) auf Basis des Abfalls (320, 420) des Leistungsniveaus und eines Betriebsbereichs des PON (100), wobei der Betriebsbereich des PON ein Empfindlichkeitsniveau (302, 402) des PON (100) umfasst und wobei das Zuweisen (606) des Schweregrads ferner auf einer Differenz zwischen dem Abfall (320, 420) und dem Empfindlichkeitsniveau (302, 402) basiert.

2. Vorrichtung (740) nach Anspruch 1, wobei die Mittel ferner dazu ausgelegt sind, das Überwachen stromaufwärts und/oder stromabwärts im PON durchzuführen.

3. Vorrichtung (740) nach einem der vorhergehenden Ansprüche, wobei das Signal an einem optischen Leitungsendgerät (110), OLT, und/oder an einem optischen Netzwerkendgerät, ONT (112, 115), des PON (100) empfangen wird.

4. Vorrichtung (740) nach einem der vorhergehenden Ansprüche, wobei der Betriebsbereich ferner ein Margenniveau (301, 401) mit Bezug auf das Empfindlichkeitsniveau (302, 402) umfasst.

5. Vorrichtung (740) nach Anspruch 4, wobei der Betriebsbereich ferner einen vordefinierten Schwellwert mit Bezug auf das Margenniveau (301, 401) umfasst.

6. Vorrichtung (740) nach einem der vorhergehenden Ansprüche, wobei die Mittel ferner zu Folgendem ausgelegt sind:
- Klassifizieren (601) der Beeinträchtigung als eine schwere Beeinträchtigung (602, 604) oder einen nicht schwere Beeinträchtigung (603, 605) auf Basis des Schweregrads.

7. Vorrichtung (740) nach einem der vorhergehenden Ansprüche, wobei die Beeinträchtigung als eine Krümmung (203) identifiziert ist, wobei die Krümmung eine Mikrokrümmung (204) oder eine Makrokrümmung (205) umfasst.

8. Vorrichtung (740) nach einem der vorhergehenden Ansprüche, wobei das PON (100) eines von einer Gruppe eines Gigabit PON, eines XGS-PON, eines NGPON2 oder eines P2P-PON ist.

9. Verfahren, das die folgenden Schritte umfasst:
- Überwachen (500) eines Leistungsniveaus (310, 410) eines Signals (300, 400) in einem passiven optischen Netzwerk, PON (100); und
- Identifizieren (504) einer Beeinträchtigung (202, 203) des PON (100) auf Basis eines Abfalls (320, 420) des Leistungsniveaus (310, 410) und
**dadurch gekennzeichnet, dass** das Verfahren ferner Folgendes umfasst:
- Zuweisen (606) eines Schweregrads zr Beeinträchtigung (202, 203) auf Basis des Abfalls (320, 420) des Leistungsniveaus und eines Betriebsbereichs des PON (100), wobei der Betriebsbereich des PON ein Empfindlichkeitsniveau (302, 402) des PON (100) umfasst und wobei das Zuweisen (606) des Schweregrads ferner auf einer Differenz zwischen dem Abfall (320, 420) und dem Empfindlichkeitsniveau (302, 402) basiert.

10. Verfahren nach Anspruch 9, das ferner den folgenden Schritt umfasst:
- Klassifizieren (601) der Beeinträchtigung als eine schwere Beeinträchtigung (602, 604) oder einen nicht schwere Beeinträchtigung (603, 605) auf Basis des Schweregrads.

11. Computerprogrammprodukt, das computerausführbare Anweisungen zum Durchführen der folgenden Schritte, wenn das Programm auf einem Computer ausgeführt wird, umfasst:
- Überwachen (500) eines Leistungsniveaus (310, 410) eines Signals (300, 400) in einem passiven optischen Netzwerk, PON (100); und
- Identifizieren (504) einer Beeinträchtigung (202, 203) des PON (100) auf Basis eines Abfalls (320, 420) des Leistungsniveaus (310, 410) und
- **dadurch gekennzeichnet, dass** das Computerprogrammprodukt ferner computerausführbare Anweisungen zum Durchführen von Folgendem umfasst: Zuweisen (606) eines Schweregrads zur Beeinträchtigung (202, 203) auf Basis des Abfalls (320, 420) des Leistungsniveaus und eines Betriebsbereichs des PON (100), wobei der Betriebsbereich des PON ein Empfindlichkeitsniveau (302, 402) des PON (100) umfasst und wobei das Zuweisen (606) des Schweregrads ferner auf einer Differenz zwischen dem Abfall (320, 420) und dem Empfindlichkeitsniveau (302, 402) basiert.

12. Computerlesbares Speichermedium, das computerausführbare Anweisungen zum Durchführen der folgenden Schritte, wenn das Programm auf einem Computer ausgeführt wird, umfasst:
- Überwachen (500) eines Leistungsniveaus (310, 410) eines Signals (300, 400) in einem passiven optischen Netzwerk, PON (100); und
- Identifizieren (504) einer Beeinträchtigung (202, 203) des PON (100) auf Basis eines Abfalls (320, 420) des Leistungsniveaus (310, 410) und
**dadurch gekennzeichnet, dass** das computerlesbare Speichermedium ferner computerausführbare Anweisungen zum Durchführen von Folgendem umfasst:
- Zuweisen (606) eines Schweregrads zur Beeinträchtigung (202, 203) auf Basis des Abfalls (320, 420) des Leistungsniveaus und eines Betriebsbereichs des PON (100), wobei der Betriebsbereich des PON ein Empfindlichkeitsniveau (302, 402) des PON (100) umfasst und wobei das Zuweisen (606) des Schweregrads ferner auf einer Differenz zwischen dem Abfall (320, 420) und dem Empfindlichkeitsniveau (302, 402) basiert.

## Revendications

1. Appareil (740) comprenant des moyens permettant de :
- surveiller (500) le niveau de puissance (310, 410) d'un signal (300, 400) dans un réseau optique passif PON (100) *(passive optical network)* ; et
- identifier (504) une dégradation (202, 203) du réseau PON (100) sur la base d'une baisse (320, 420) du niveau de puissance (310, 410) ; et
**caractérisé en ce que** les moyens sont configurés en outre pour :
- attribuer (606) un score de gravité à la dégradation (202, 203) sur la base de la baisse (320, 420) du niveau de puissance et sur la base d'une plage de fonctionnement du réseau PON (100), dans lequel la plage de fonctionnement du réseau PON comprend un niveau de sensibilité (302, 402) du réseau PON (100) ; et
dans lequel l'attribution (606) du score de gravité est fondée en outre sur une différence entre la baisse (320, 420) et le niveau de sensibilité (302, 402).

2. Appareil (740) selon la revendication 1, dans lequel les moyens sont configurés en outre pour réaliser la surveillance en amont et/ou en aval du réseau PON.

3. Appareil (740) selon l'une des revendications précédentes, dans lequel le signal est reçu au niveau d'une terminaison de ligne optique (110), OLT (*optical line terminal*)*,* et/ou d'une terminaison de réseau optique (112, 115), ONT (*optical network terminal*)*,* du réseau PON (100).

4. Appareil (740) selon l'une des revendications précédentes, dans lequel la plage de fonctionnement comprend en outre un niveau de marge (301, 401) par rapport au niveau de sensibilité (302, 402).

5. Appareil (740) selon la revendication 4, dans lequel la plage de fonctionnement comprend en outre un seuil prédéfini par rapport au niveau de marge (301, 401).

6. Appareil (740) selon l'une des revendications précédentes, dans lequel les moyens sont configurés en outre pour :
- classer (601) la dégradation comme une dégradation grave (602, 604) ou une dégradation non grave (603, 605) sur la base du score de gravité.

7. Appareil (740) selon l'une des revendications précédentes, dans lequel la dégradation est identifiée comme une courbure (203), la courbure comprenant une microcourbure (204) ou une macrocourbure (205).

8. Appareil (740) selon l'une des revendications précédentes, dans lequel le réseau PON (100) est l'un des réseaux PON du groupe comprenant un réseau PON gigabitaire, un réseau PON symétrique de 10 gigabits (XGS-PON), un réseau PON de 40 gigabits (NG-PON2) et un réseau PON point à point (P2P-PON) .

9. Procédé comprenant les étapes consistant à :
- surveiller (500) le niveau de puissance (310, 410) d'un signal (300, 400) dans un réseau optique passif, PON (100) ; et
- identifier (504) une dégradation (202, 203) du réseau PON (100) sur la base d'une baisse (320, 420) du niveau de puissance (310, 410) ; et
**caractérisé en ce que** le procédé comprend en outre l'étape suivante :
- attribuer (606) un score de gravité à la dégradation (202, 203) sur la base de la baisse du niveau de puissance (320, 420) et sur la base d'une plage de fonctionnement du réseau PON (100), dans lequel la plage de fonctionnement du réseau PON comprend un niveau de sensibilité (302, 402) du réseau PON (100) ; et
dans lequel l'attribution (606) du score de gravité est fondée en outre sur une différence entre la baisse (320, 420) et le niveau de sensibilité (302, 402).

10. Procédé selon la revendication 9, comprenant en outre l'étape consistant à :
- classer (601) la dégradation comme une dégradation grave (602, 604) ou une dégradation non grave (603, 605) sur la base du score de gravité.

11. Produit-programme informatique comprenant des instructions exécutables par ordinateur, permettant d'effectuer les étapes suivantes, lorsque le programme est exécuté sur un ordinateur :
- surveiller (500) le niveau de puissance (310, 410) d'un signal (300, 400) dans un réseau optique passif, PON (100) ; et
- identifier (504) une dégradation (202, 203) du réseau PON (100) sur la base d'une baisse (320, 420) du niveau de puissance (310, 410) ; et
**caractérisé en ce que** le produit-programme informatique comprend en outre des instructions exécutables par ordinateur, permettant de : attribuer (606) un score de gravité à la dégradation (202, 203) sur la base de la baisse (320, 420) du niveau de puissance et sur la base d'une plage de fonctionnement du réseau PON (100), dans lequel la plage de fonctionnement du réseau PON comprend un niveau de sensibilité (302, 402) du réseau PON (100) ; et
dans lequel l'attribution (606) du score de gravité est fondée en outre sur une différence entre la baisse (320, 420) et le niveau de sensibilité (302, 402).

12. Support de stockage lisible par ordinateur, comprenant des instructions exécutables par ordinateur, permettant d'effectuer les étapes suivantes, lorsque le programme est exécuté sur un ordinateur :
- surveiller (500) le niveau de puissance (310, 410) d'un signal (300, 400) dans un réseau optique passif, PON (100) ; et
- identifier (504) une dégradation (202, 203) du réseau PON (100) sur la base d'une baisse (320, 420) du niveau de puissance (310, 410) ; et
**caractérisé en ce que** le support de stockage lisible par ordinateur comprend en outre des instructions exécutables par ordinateur, permettant de :
- attribuer (606) un score de gravité à la dégradation (202, 203) sur la base de la baisse (320, 420) du niveau de puissance et sur la base d'une plage de fonctionnement du réseau PON (100), dans lequel la plage de fonctionnement du réseau PON comprend un niveau de sensibilité (302, 402) du réseau PON (100) ; et dans lequel l'attribution (606) du score de gravité est fondée en outre sur une différence entre la baisse (320, 420) et le niveau de sensibilité (302, 402).
